# EUROPÄISCHE PATENTANMELDUNG

(11) **EP 2 465 759 A2**
(43) Veröffentlichungstag der Anmeldung: **20.06.2012**
(21) Anmeldenummer: 11193280.2
(22) Anmeldetag: 13.12.2011
(51) Int. Cl.: B62K 3/00, B62M 1/04

(54) **Fahrrad**

(30) Priorität: 20.12.2010 DE 102010063599
(71) Anmelder: Nauerz, Jörg, 95701 Pechbrunn (DE)
(72) Erfinder: Nauerz, Jörg, 95701 Pechbrunn (DE)
(74) Vertreter: Isarpatent

(57) **Zusammenfassung**

Die Erfindung betrifft ein Fahrrad, insbesondere Sitzfahrrad, mit einem Rahmen (1), an dessen vorderen Ende eine erste Welle (8) angeordnet ist, die jeweils etwa symmetrisch zum Rahmen (1) mit Freilaufeinrichtungen (16,17) versehen ist, welche jeweils über einen Hebel (21,22) mit jeweils einem Pedal (19,20) in Antriebsverbindung steht, wobei der Rahmen (1) aus einem ersten, etwa horizontal verlaufenden Rahmenabschnitt (1a) und einem an den horizontalen Rahmenabschnitt (1a) sich anschließenden, nach vorne und oben geneigten weiteren Rahmenabschnitt (1b) besteht, wobei auf der ersten Welle (8) ein Zahnrad (24) sitzt, welches gegebenenfalls über ein Ritzel (27) in Antriebsbeziehung zu einem ersten Kettenrad (26) steht und das erste Kettenrad (26) über eine Kette (29) oder dergleichen mit einem zweiten Kettenrad (32) verbunden ist, welches zur Übertragung eines Drehmoments auf das Hinterrad (5) mit einem am Hinterrad (5) angeordneten weitere Kettenrad (38) in Antriebsbeziehung steht.

## Beschreibung

Die Erfindung betrifft ein Fahrrad, insbesondere ein Sitzfahrrad.

Es sind so genannte Liegefahrräder bekannt, die zumeist dreirädrig ausgebildet sind und im vorderen Bereich ein Kettenrad mit daran angelenkten Pedalen aufweisen. Die über das Kettenrad geführte Kette steht mit einem an der Hinterachse des Liegefahrrades angeordneten weiteren Kettenrad in Verbindung, um die durch die Pedalbewegung erzeugte Kraft auf die Hinterräder zu übertragen. Dieses Prinzip wird auch bei zweirädrigen Liegefahrrädern angewandt. Nachteilig bei derartigen Liegerädern ist, dass von der Liegeposition des Fahrradfahrers ausgehend die Pedale unbequem zu erreichen und zu betätigen sind, da sie zumeist auf einer vom Sitz nach vorne strebenden horizontalen Rahmenstange angelenkt sind und daher die Kraftübertragung von den Füßen auf die Pedale und somit zur Antriebsachse ungünstig ist.

Der Erfindung liegt die Aufgabe zugrunde, ein Fahrrad, insbesondere ein Sitzfahrrad, zu schaffen, welches eine bequeme Position des Fahrradfahrers und eine gute Kraftübertragung von den Pedalen auf die zugehörige Antriebsachse gewährleistet.

Diese Aufgabe wird erfindungsgemäß gelöst bei einem Fahrrad, insbesondere Sitzfahrrad, mit einem Rahmen, an dessen vorderen Ende eine erste Welle angeordnet ist, die jeweils etwa symmetrisch zum Rahmen mit Freilaufeinrichtungen versehen ist, welche jeweils über einen Hebel mit jeweils einem Pedal in Antriebsverbindung steht, wobei der Rahmen aus einem ersten, etwa horizontal verlaufenden Rahmenabschnitt und einem an den horizontalen Rahmenabschnitt sich anschließenden, nach vorne und oben geneigten weiteren Rahmenabschnitt besteht, wobei auf der ersten Welle ein Zahnrad sitzt, welches gegebenenfalls über ein Ritzel in Antriebsbeziehung zu einem ersten Kettenrad steht und das erste Kettenrad über eine Kette oder dergleichen mit einem zweiten Kettenrad verbunden ist, welches zur Übertragung eines Drehmoments auf das Hinterrad mit einem am Hinterrad angeordneten weitere Kettenrad in Antriebsbeziehung steht.

Das erfindungsgemäße Fahrrad, insbesondere ein Sitzfahrrad, hat die Bezeichnung "Sitzfahrrad" deswegen, weil gemäß einer bevorzugten Ausführungsform die das Fahrrad bedienende Person nicht in einer Liegeposition, sondern in einer Sitzposition auf dem Fahrrad sitzt, wobei allerdings durch Verstellung des Sitzes der Fahrradfahrer auch eine zumindest annähernde Liegeposition einnehmen kann. Bei vorliegender Erfindung ist vorgesehen, dass der Rahmen zumindest aus einem im Wesentlichen horizontalen Rahmenabschnitt und einem daran angesetzten, schräg nach vorne und oben verlaufenden weiteren Rahmenabschnitt besteht, wobei im Bereich des nach vorne stehenden freien Endes des geneigten Rahmenabschnitts eine durch Pedale betätigte Antriebswelle sitzt. Die Pedale sind über einen Hebel und jeweils einen Freilauf einer ersten Welle verbunden, wodurch ein exzentrischer Antrieb geschaffen wird, mit dem die Pedale jeweils gegenläufig, gegebenenfalls aber auch gleichläufig betätigt werden können. Im Gegensatz zu üblichen Liegerädern hat der Fahrradfahrer nicht die übliche kreisförmige Antriebsbewegung mit den Füßen zu praktizieren, sondern vorzugsweise eine Hin- und Herbewegung der Pedale in einer im Wesentlichen horizontal verlaufenden Bewegungsrichtung.

Durch die mittels eines exzentrischen Antriebs in Form eines zwischen jedem Pedal und der Antriebswelle befindlichen Hebels wird eine optimale Kraftübertragung auf den Antrieb gewährleistet.

Bei einer bevorzugten Ausführungsform befindet sich auf der über den Freilauf angetriebenen Antriebswelle ein Zahnrad, welches über ein zwischengeschaltetes Zahnritzel eine am Rahmen befestigte weitere Welle antreibt, auf welcher wiederum ein Kettenrad angeordnet ist, das über eine Kette zum am Hinterrad befindlichen Antrieb in Antriebsbeziehung steht. Durch die Betätigung der Pedale wird die am geneigten Rahmenabschnitt angeordnete Welle in einer Richtung bewegt, die entgegengesetzt zur Drehrichtung des Hinterrades bei Vorwärtsfahrt steht, weshalb bei einer bevorzugten Ausführungsform ein zwischengeschaltetes Ritzel vorgesehen ist, welches eine Drehrichtungsumkehr bewirkt, um das auf der Achse des Ritzels befindliche erste Kettenrad in derjenigen Richtung drehen zu lassen, in welcher das Hinterrad bei Vorwärtsfahrt dreht.

Die auf der ersten Welle angeordneten Freilaufeinrichtungen ermöglichen die Hin- und Herbewegung der Pedale entlang einer im Wesentlichen schwach bogenförmig, im Wesentlichen horizontal verlaufenden Bewegungsbahn.

Bei einer bevorzugten Ausführungsform befindet sich im Bereich des Rahmens ein zweites Kettenrad, welches auf einer Achse gelagert ist und über die Kette mit dem ersten Kettenrad der zweiten Antriebswelle in Verbindung steht. Die Ausgangswelle des hinteren bzw. zweiten Kettenrades wirkt bei einer weiteren Ausführungsform auf einen Kraftspeicher, insbesondere in Form einer Torsionsfeder, so zumindest beim Anfahren durch Betätigen der Pedale der Kraftspeicher eine Kraft speichert bis zu einem vorgegebenen oberen Wert, bevor über die Kraftspeichereinrichtung eine mit dieser gekuppelte Ausgangswelle ein weiteres Kettenrad antreibt, welches über eine weitere Kette mit dem Hinterradantrieb in Verbindung steht.

Bei einer weiteren Ausführungsform ist das zweite Kettenrad mit einer Sperrvorrichtung versehen, welche die Drehrichtung des zweiten Kettenrades nur in der Fahrtrichtung sicherstellt.

Nachfolgend werden bevorzugte Ausführungsformen des erfindungsgemäßen Fahrrads anhand der Zeichnung zur Erläuterung weiterer Merkmale beschrieben. Es zeigen:
- Fig. 1: eine schematische Seitenansicht des Fahrrads,
- Fig. 2: eine schematische Aufsicht auf das Fahrrad nach Fig. 1,
- Fig. 3: die durch die Pedale angetriebene Antriebsachse im vorderen Abschnitt des Fahrrads,
- Fig. 4: eine schematische Darstellung der Antriebseinheit, die dem Hinterrad zugeordnet ist.

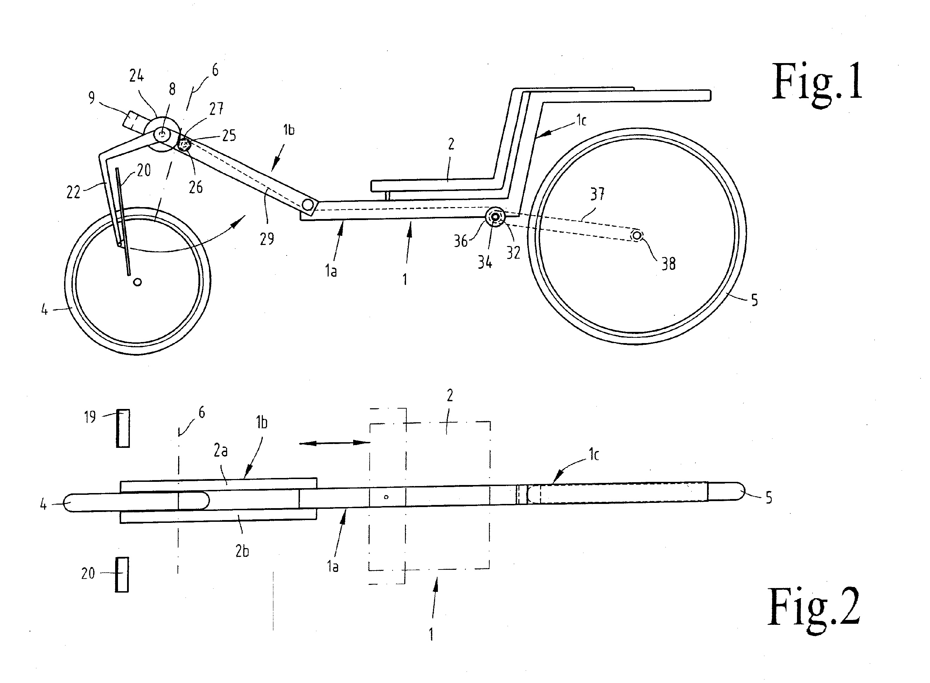

Fig. 1 zeigt eine Seitenansicht des erfindungsgemäßen Fahrrads, und Fig. 2 zeigt eine Aufsicht auf das Fahrrad. Grundsätzlich kann dieses Fahrrad ein Hinterrad oder zwei auf einer Achse gelagerte Hinterräder aufweisen. Bei der nachfolgenden Beschreibung wird eine bevorzugte Ausführungsform erläutert, bei welcher lediglich ein Hinterrad vorgesehen ist.

Das Fahrrad weist einen Rahmen 1 auf, der im Wesentlichen aus einem ersten Rahmenabschnitt 1a und einem zweiten Rahmenabschnitt 1b besteht, von welchen der Rahmenabschnitt 1a im Wesentlichen horizontal verläuft. An den Rahmenabschnitt 1a schließt sich der leicht nach vorne und nach oben geneigte zweite Rahmenabschnitt 1b an.

An den Rahmenabschnitt 1a kann sich ein weiterer, mit 1c bezeichneter rückwärtiger Rahmenabschnitt anschließen, der zusammen mit dem Rahmenabschnitt 1a eine Lagerfläche für einen Sitz 2 festlegt.

Wie sich aus Fig. 2 ergibt, besteht der Rahmenabschnitt 1b vorzugsweise aus zwei parallelen Rahmenteilen vorzugsweise in Form von Röhren 2a, 2b.

Gemäß einer bevorzugten Ausführungsform werden als Rahmenabschnitte bzw. Rahmenteile Quadratrohre verwendet, wobei die Rahmenteile 2a, 2b in nicht weiter zu erläuternder Weise fest mit dem mittigen bzw. horizontalen Rahmenabschnitt 1a verbunden sind. Das Vorderrad des Fahrrads ist mit 4, das Hinterrad mit 5 bezeichnet.

Ein derartiges Fahrrad muss zur Verstellung des Vorderrades 4 eine Gabel aufweisen, die in den Zeichnungen nur schematisch dargestellt und mit 6 bezeichnet ist. Die Art und Weise der Lenkung der Gabel 6 ist nicht Bestandteil vorliegender Erfindung und wird daher nicht separat beschrieben. Es versteht sich, dass die Gabel fest mit dem Vorderrad 4 verbunden sein muss und durch Bowdenzüge oder Ähnliches vom Fahrradfahrer betätigt werden kann.

Bei vorliegender Erfindung ist gemäß Fig. 1 und 2 vorgesehen, dass im vorderen Bereich des Rahmenabschnitts 1b eine Antriebswelle 8 angeordnet ist. Zur Lagerung der Antriebswelle 8 ist gemäß einer bevorzugten Ausführungsform am vorderen Ende des Rahmenabschnittes 1b eine Querstange 9 vorgesehen, die an ihren Enden zurückverlaufende Schenkel 10, 11 trägt, an deren Enden Lager 12, 13 zur Aufnahme der Antriebswelle 8 ausgebildet sind. Die Antriebswelle 8 kann aber auch direkt in den beiden Rohren 2a, 2b gelagert sein, die den Rahmenabschnitt 1b ergeben.

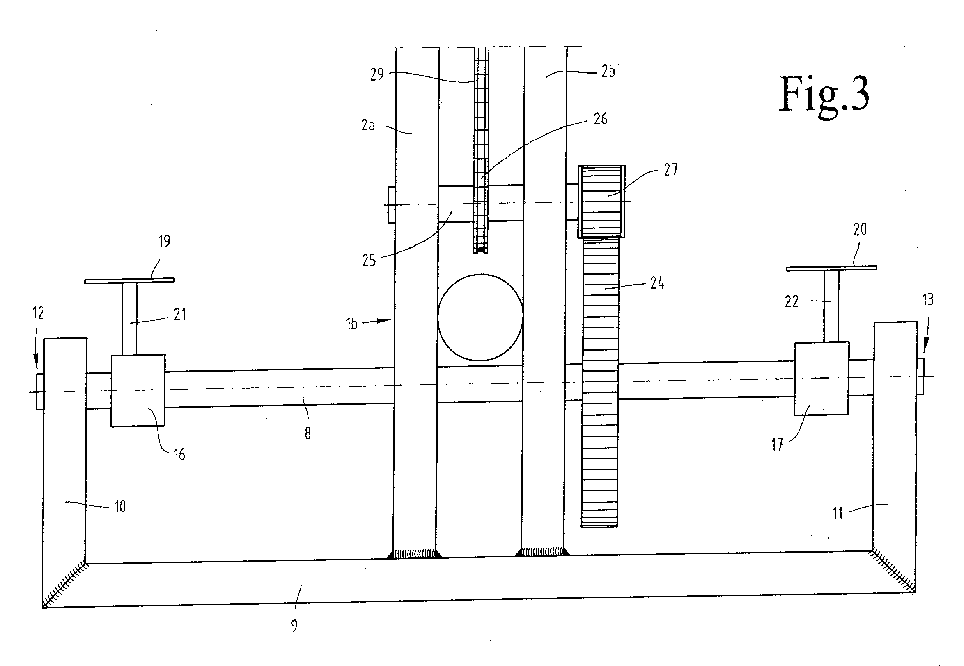

Die Lager 12, 13 lagern die Antriebswelle 8 drehfähig. Auf der Antriebswelle 8 befinden sich gemäß Fig. 3 vorzugsweise symmetrisch angeordnet und seitlich zum Rahmenabschnitt 1b Freilaufeinrichtungen 16, 17, die mit Pedalen 19, 20 über jeweils einen Hebel 21, 22 in Verbindung stehen. Die Hebel 21, 22 sind, wie aus Fig. 1 ersichtlich ist, vorzugsweise winkelförmig, wodurch der Bewegungsweg der Pedale 19, 20 im Wesentlichen horizontal, gegebenenfalls leicht bogenförmig, verläuft. Die über die Pedale 19, 20 über die Hebel 21, 22 aufgebrachte Kraft wird über den jeweiligen Freilauf 16, 17 auf die Antriebswelle 8 übertragen. Hierbei können die Pedale 19, 20 gegenläufig oder auch gleichläufig betätigt werden. Die Drehrichtung der Antriebswelle 8 ist bei dieser Ausführungsform entsprechend Fig. 1 im Uhrzeigersinn. Das infolge der Betätigung der Pedale 19, 20 erzeugte Drehmoment wird über die Freilaufeinrichtungen 16, 17 auf die Antriebswelle 8 übertragen, auf welcher ein Zahnrad 24 montiert ist. Bei dieser Ausführungsform befindet sich das Zahnrad 24 seitlich des Rahmenabschnitts 1b. In dem Rahmenabschnitt 1b befindet sich eine weitere, zweite Welle 25, auf der ein erstes Kettenrad 26 und ein Ritzel 27 sitzen, wobei das Ritzel 27 mit dem Zahnrad 24 kämmt. Zweck des Ritzels 27 ist es, eine Drehrichtungsumkehr hervorzurufen, da sich das Zahnrad 24 bei Betätigung der Pedale 19, 20 in der Darstellung nach Fig. 1 im Uhrzeigersinn dreht, während die Drehung des Hinterrades bei Vorwärtsfahrt des Fahrrads entgegen dem Uhrzeigersinn erfolgen muss.

Das erste Kettenrad 26 sitzt vorzugsweise mittig im Rahmenabschnitt 1b und kämmt mit einer Kette 29, die über den Rahmenabschnitt 1a oder durch den Rahmabschnitt 1a hindurch mit einem zweiten Kettenrad 32 (Fig. 1) in Antriebsbeziehung steht.

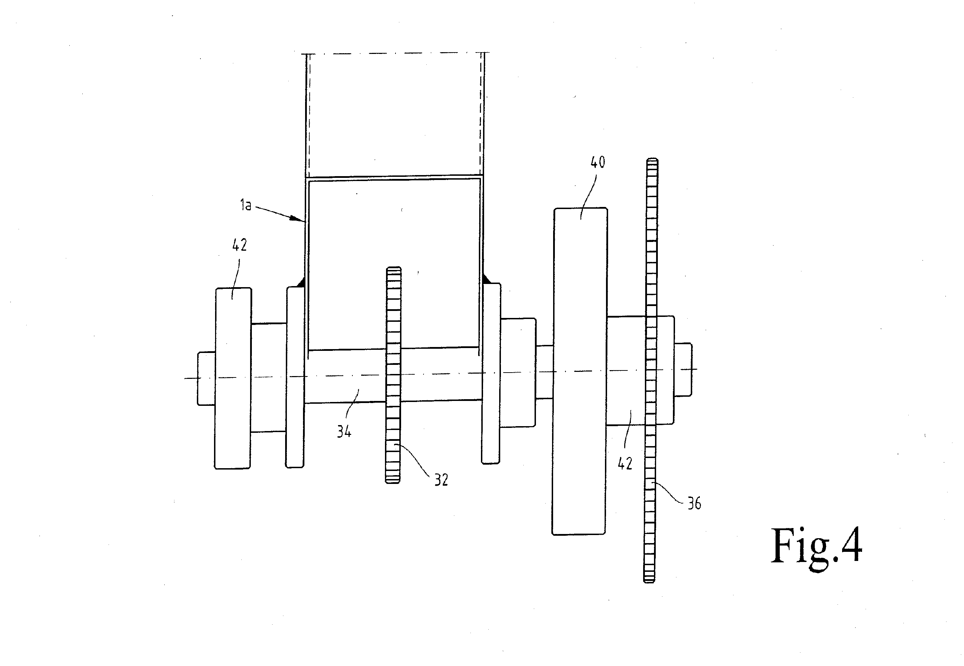

Vorstehend wurde die Drehmomentübertragung, ausgehend von der Betätigung der Pedale 19, 20, näher erläutert. Die Kraftübertragung wird dann von der Kette 29 zum zweiten Kettenrad 32 (Fig. 4) durch die in Fig. 4 nicht nochmals dargestellte Kette 29 vorgenommen. Das zweite Kettenrad 32 sitzt auf einer dritten Welle 34, die vorzugsweise im Rahmenabschnitt 1a drehfähig gelagert ist. Über die Welle 34 wird das Drehmoment auf ein weiteres, drittes Kettenrad 36 übertragen, welches mit einer Kette 37 kämmt, die wiederum mit einem Zahn- bzw. Kettenrad 38 als viertes Kettenrad in Beziehung steht, wobei das vierte Kettenrad 38 mit dem Hinterrad 5 in fester Antriebsbeziehung steht und somit das Hinterrad 5 antreibt.

Bei einer abgewandten Ausführungsform ist zwischen das zweite Kettenrad 32 und das dritte Kettenrad 36 ein Kraftspeicher eingesetzt, der durch die Welle 34 ein Drehmoment aufnehmen kann. Ausgangsseitig des Kraftspeichers 40 befindet sich eine Ausgangswelle oder Ausgangshülse 42, auf welcher das dritte Kettenrad 36 fest gelagert ist. Im Anfahrzustand kann bei dieser Ausführungsform ein durch die Betätigung der Pedale 19, 20 erzeugtes Drehmoment zur Aufladung des Kraftspeichers 40 führen, bis dieser Kraftspeicher 40 aufgeladen ist, bevor die weitere Betätigung der Pedale dazu führt, dass sich die Ausgangswelle 42 dreht und das Kettenrad 36 in Drehbewegung versetzt wird.

Als Kraftspeicher 40 kann beispielsweise eine Torsionsfeder angewandt werden, die durch die Drehmomentübertragung bis zu einem vollständig gespannten Zustand gespannt wird, bevor die auf diese Weise gespeicherte Kraft über die Ausgangswelle bzw. Ausgangshülse 42 auf das Kettenrad 36 übertragen wird. Im Anfahrzustand wird somit eine "Starthilfe" ermöglicht, wobei die Aufladung des Kraftspeichers 40 vorzugsweise dadurch bewerkstelligt werden kann, dass der Fahrradfahrer eine Bremse zieht, so lange, bis der Kraftspeicher 40 aufgeladen ist. Durch Lösen der nicht gezeigten Bremse wird dann die gespeicherte Kraft beim Anfahren des Fahrrades freigegeben und unterstützt den Fahrradfahrer beim Anfahren.

Bei einer weiteren bevorzugten Ausführungsform ist auf der Antriebswelle 34 eine Sperreinrichtung 42 vorgesehen, welche eine Drehung der Antriebswelle 34 nur in einer Richtung, nämlich der Fahrtrichtung des Fahrrades gestattet.

Mit Hilfe der Sperreinrichtung 42 wird auch verhindert, dass sich der Kraftspeicher 40 unbeabsichtigt entlädt.

Bei dem vorstehend beschriebenen Fahrrad befindet sich auf dem Rahmenabschnitt 1a ein vorzugsweise verstellbarer Sitz 2 mit einer Rückenlehne, so dass eine Anpassung des Abstandes zwischen Sitz und Position der Antriebswelle 8 bzw. den Pedalen 19, 20 möglich ist. Die den Rahmen 1 bzw. die Rahmenabschnitte 1a bis 1c bildenden Rohre sind vorzugsweise Quadratrohre.

## Patentansprüche

1. Fahrrad, insbesondere Sitzfahrrad, mit einem Rahmen (1), an dessen vorderen Ende eine erste Welle (8) angeordnet ist, die jeweils etwa symmetrisch zum Rahmen (1) mit Freilaufeinrichtungen (16, 17) versehen ist, welche jeweils über einen Hebel (21, 22) mit jeweils einem Pedal (19, 20) in Antriebsverbindung steht,
wobei der Rahmen (1) aus einem ersten, etwa horizontal verlaufenden Rahmenabschnitt (1a) und einem an den horizontalen Rahmenabschnitt (1a) sich anschließenden, nach vorne und oben geneigten weiteren Rahmenabschnitt (1b) besteht,
wobei auf der ersten Welle (8) ein Zahnrad (24) sitzt, welches gegebenenfalls über ein Ritzel (27) in Antriebsbeziehung zu einem ersten Kettenrad (26) steht,
wobei das erste Kettenrad (26) über eine Kette (29) oder dergleichen mit einem zweiten Kettenrad (32) verbunden ist,
welches zur Übertragung eines Drehmoments auf das Hinterrad (5) mit einem am Hinterrad angeordneten weitere Kettenrad (38) in Antriebsbeziehung steht.

2. Fahrrad nach Anspruch 1,
**dadurch gekennzeichnet,**
**dass** das erste Kettenrad (26) und das Ritzel (27) auf einer im Rahmen (1) gelagerten Welle (25) montiert sind.

3. Fahrrad nach Anspruch 1 oder 2,
**dadurch gekennzeichnet,**
**dass** der zweite Rahmenabschnitt (1b) im Bereich seines vorderen Endes eine Querstange (9) trägt, die seitlich mit zurückverlaufenden Schenkeln bzw. Rohrabschnitten (10, 11) versehen ist, wobei die erste Welle (8) drehfähig in den Schenkeln bzw. Rohren (10, 11) gelagert ist.

4. Fahrrad nach Anspruch 1,
**dadurch gekennzeichnet,**
**dass** die Hebel (21, 22) Winkelhebel sind, deren Scheitel vom Rahmen (1) wegweisend vorgesehen sind.

5. Fahrrad nach wenigstens einem der vorangehenden Ansprüche, **dadurch gekennzeichnet,**
**dass** die zweite Welle (25) zur Aufnahme des ersten Kettenrades (26) vorgesehen ist, welches über eine Kette (29) mit einem zweiten Kettenrad (32) in Antriebsverbindung steht, welches auf einer im Rahmen (1) gelagerten weiteren Welle (34) sitzt.

6. Fahrrad nach Anspruch 5
**dadurch gekennzeichnet,**
**dass** die weitere Welle (34) mit einem weiteren Kettenrad (36) in Antriebsbeziehung steht, welches fest mit dem Hinterrad verbunden ist.

7. Fahrrad nach Anspruch 5 oder 6,
**dadurch gekennzeichnet,**
**dass** zwischen dem zweiten Kettenrad (32) und dem dritten Kettenrad (36) ein Kraftspeicher (40), vorzugsweise in Form einer Torsionsfeder, vorgesehen ist, welcher eine Ausgangswelle bzw. Ausgangshülse (42) aufweist, auf welcher das dritte Kettenrad (36) montiert ist.

8. Fahrrad nach einem der Anspruch 6,
**dadurch gekennzeichnet,**
**dass** die weitere Welle (34) eine Sperreinrichtung (42) aufweist.

9. Fahrrad nach wenigstens einem der vorangehenden Ansprüche, **dadurch gekennzeichnet,**
**dass** die Pedale (19, 20) und die Hebel (21, 22) unterhalb des vorderen Rahmenabschnitts (1b) angeordnet sind.

10. Fahrrad nach wenigstens einem der vorangehenden Ansprüche, **dadurch gekennzeichnet,**
**dass** der vordere Rahmenabschnitt (1b) aus zwei zueinander beabstandeten, parallelen Rahmenteilen (2a, 2b) besteht.
